# FASCICULE DE BREVET EUROPEEN

(11) **EP 2 977 670 B1**
(45) Date de publication et mention de la délivrance du brevet: **03.07.2019**
(21) Numéro de dépôt: 15162707.2
(22) Date de dépôt: 08.04.2015
(51) Int. Cl.: F17C 9/00, F17C 6/00, F17C 13/02, F17C 5/00

(54) **DISPOSITIF ET PROCÉDÉ DE FOURNITURE DE FLUIDE**
FLUIDZULEITUNGSVORRICHTUNG UND -VERFAHREN
DEVICE AND METHOD FOR SUPPLYING FLUID

(30) Priorité: 12.06.2014 FR 1455321
(43) Date de publication de la demande: 27.01.2016
(73) Titulaire: L'AIR LIQUIDE, SOCIETE ANONYME POUR L'ETUDE ET L'EXPLOITATION DES PROCEDES GEORGES CLAUDE, 75007 Paris (FR)
(72) Inventeur: Sanglan, Patrick, 38180 Seyssins (FR); Staempflin, Martin, 38950 Quaix en Chartreuse (FR)
(74) Mandataire: De Cuenca, Emmanuel Jaime

(56) Documents cités:
- EP-A1- 1 353 112
- EP-A2- 0 754 904
- DE-A1-102009 039 645
- US-A- 5 771 946

## Description

La présente invention concerne un dispositif et un procédé de fourniture de fluide.

L'invention concerne plus particulièrement un dispositif de fourniture de fluide comprenant un réservoir source de stockage de carburant gazeux à une température cryogénique sous la forme d'un mélange liquide-gaz, une pompe cryogénique, la pompe comprenant une entrée d'aspiration reliée à la partie inférieure du réservoir via une ligne d'aspiration, une première sortie haute pression destinée à fournir du fluide sous pression à un utilisateur et une seconde sortie de dégazage reliée à la partie supérieure du réservoir via une conduite de retour.

L'invention concerne un dispositif de fourniture de fluide sous pression (liquide ou gaz) à partir d'un réservoir de liquide stocké à une température cryogénique. Pour obtenir du gaz sous pression, le liquide pompé peut être vaporisé dans un vaporiseur.

Les installations de pompage de liquide cryogénique haute pression comprenant une pompe pour soutirer et comprimer du liquide cryogénique à partir d'un réservoir isolé sous vide sont confrontées à la gestion des gaz de vaporisation générés (« boil-off » en anglais). Ces gaz de vaporisation sont générés par le réservoir, par la pompe et ses tuyauteries de liaison avec le réservoir, par les cycles de fonctionnement de la pompe en particulier lors des phases de mises en froid. Tout ces gaz générés sont en principe renvoyés vers le réservoir idéalement dans la phase liquide à l'aide d'un dispositif de thermo-siphon pour être recondensés ou bien dans la phase gazeuse lorsque les fluides utilisés ne permettent pas ou difficilement l'utilisation du thermosiphon. C'est souvent le cas avec des fluides peu denses et très volatils comme l'hydrogène. Les quantités de gaz générées peuvent être très importantes avec pour résultat des montées en pression intempestives du réservoir et des rejets d'hydrogène à l'atmosphère. Une autre conséquence de ces flux gazeux renvoyés vers le réservoir est une augmentation de la pression dans le réservoir mais aussi de la température du fluide avec pour conséquence des pertes possibles de NPSH en entrée de la pompe (« NPSH » = «Net Positive Suction Head» en anglais c'est-à-dire « hauteur de charge net absolue » ou « perte de charge en entrée »).

Ces phénomènes doivent être pris en compte en particulier dans le cas du pompage de fluides à faible masse molaire (hydrogène, hélium).

Pomper un gaz sous forme liquide est généralement plus avantageux en terme d'efficacité énergétique que de comprimer sous forme gazeuse.

Cependant, le pompage d'hydrogène liquide est relativement délicat. Du fait de sa faible densité et de sa volatilité il est relativement difficile de le maintenir sous forme liquide jusque dans la pompe. Ceci peut provoquer des phénomènes de cavitation et du gaz peut être généré dans la pompe qui doit être renvoyé dans le réservoir. La compression cryogénique d'hydrogène liquide jouit d'un certain intérêt aujourd'hui pour les applications futures de l'hydrogène énergie. Cette phase d'émergence d'un marché conduit à l'utilisation de matériels et produits issus d'autres applications et marchés et dont les spécifications et performances sont peu compatibles avec les projets de démonstrations visées. Par exemple, le temps de maintien en froid de la pompe doit être limité à deux heures par opération, obligeant des cycles de réchauffage/mise en froid générateurs de quantités importantes de gaz.

Pour des stations de compression d'hydrogène de grande capacité, la quantité de gaz généré peut être significative et peut justifier l'investissement d'une station de compression additionnelle pour comprimer ce gaz produit et le stocker dans un réservoir de récupération. Ceci est cependant défavorable au bilan économique de l'installation.

La pompe est alimentée en liquide par réservoir via une ligne d'aspiration et maintenue à température basse pendant le fonctionnement. Le gaz produit est renvoyé au réservoir via une sortie de dégazage de la pompe. Cette quantité de gaz produit dépend des performances thermiques de l'installation et de la pompe et des cycles de fonctionnement.

Lorsque la pompe est arrêtée (température ambiante), la pompe et les lignes concernées du circuit pour son alimentation sont chaudes (température ambiante). Le réservoir sous vide vaporise du liquide du fait des entrées de chaleur ce qui fait monter la pression dans le réservoir.

Avant d'utiliser l'installation, le circuit et la pompe doivent être refroidis. Ceci est réalisé en pompant du liquide qui est renvoyé dans le réservoir via la sortie de dégazage de la pompe. Ceci contribue également à augmenter la pression dans le réservoir.

Il existe deux principales architectures de pompage pour les fluides cryogéniques et en particulier pour l'hydrogène liquide. Dans une première architecture dite « standard » la pompe prélève du liquide en partie basse du réservoir et la sortie de dégazage de la pompe est reliée à la partie haute du réservoir (phase gazeuse). Lorsque le réservoir est plein ceci peut générer des augmentations de pression importantes nécessitant un dégazage à l'extérieur.

Dans une seconde architecture dite de type « thermosiphon » la sortie de dégazage est reliée à la partie basse du réservoir (phase liquide). Le gaz ou le liquide plus chaud est renvoyé dans la phase liquide où il est re-liquéfié ou refroidi. Ce dispositif avec thermosiphon permet de limiter la montée en pression du réservoir. La pompe constitue la source chaude du thermo-siphon. Pour un fonctionnement nominal, un thermosiphon exige le respect d'un certain nombre de dispositions de conception et d'installation pour maitriser les pertes de charge, pour disposer d'une hauteur gravimétrique nécessaire et suffisante à l'amorçage et à son fonctionnement ainsi que pour s'assurer de la disponibilité de la source de la chaleur. A cet effet, il peut y avoir une contradiction entre les entrées de chaleur sur la pompe et les tuyauteries d'alimentation que l'on veut les plus faibles possibles pour minimiser la génération de gaz et le besoin de chaleur requis pour assurer un fonctionnement satisfaisant du thermosiphon.

La chaleur introduite dans la partie liquide réduit la densité du liquide suffisamment pour générer une circulation de liquide de type « thermo-siphon » de l'aspiration vers la sortie de dégazage de la pompe même lorsque la pompe ne pompe pas. Pour un bon fonctionnement, la différence de hauteur entre le point d'aspiration de la pompe et le point de retour dans le réservoir doit être respectée.

Cette architecture de type thermo-siphon fonctionne difficilement avec des fluides légers tels que l'hydrogène. Il est ainsi pratiquement impossible de former une circulation naturelle de type thermo-siphon dans une pompe avec de l'hydrogène, en particulier lorsque le réservoir est presque vide.

Le document US5771946 décrit un dispositif, conforme au préambule de la revendication 1.

Un but de la présente invention est de pallier tout ou partie des inconvénients de l'art antérieur relevés ci-dessus.

A cette fin, le dispositif selon l'invention, par ailleurs conforme à la définition générique qu'en donne le préambule ci-dessus, est essentiellement caractérisé en ce qu'il comprend un stockage cryogénique tampon, une première conduite reliant la partie inférieure du stockage tampon au réservoir et une seconde conduite reliant la partie supérieure du réservoir au stockage tampon et en ce que le dispositif comprend un organe de liquéfaction du gaz dans le stockage tampon.

Par ailleurs, des modes de réalisation de l'invention peuvent comporter l'une ou plusieurs des caractéristiques suivantes :
- la première conduite est distincte de la ligne d'aspiration,
- la seconde conduite peut former ou comporter un tube permettant de transférer du liquide entre le stockage tampon et le réservoir,
- la pompe est configurée pour fonctionner de façon bidirectionnelle (le flux de liquide peut être inversé),
- la seconde conduite comprend une première extrémité raccordée à la partie supérieure du stockage tampon et une seconde extrémité raccordée à la conduite de retour, c'est-à-dire que le stockage tampon est raccordé au réservoir et à la seconde sortie de la pompe via la conduite de retour,
- le stockage tampon comprend au moins un réchauffeur pour réchauffer sélectivement le fluide contenu dans le stockage tampon en vue d'augmenter la pression au sein de ce dernier,
- le stockage tampon comprend deux réchauffeurs disposés respectivement dans les partie supérieure et inférieure du stockage,
- l'une au moins parmi : la ligne d'aspiration, la conduite de retour, la première conduite, la seconde conduite comprend au moins une vanne notamment au moins une vanne pilotée,
- le dispositif comprend un organe d'acquisition de stockage et de traitement de données relié à la au moins une vanne et à l'organe de liquéfaction,
- l'organe d'acquisition de stockage et de traitement de données est relié également à le ou les réchauffeurs, l'organe d'acquisition de stockage et de traitement de données étant conformé pour piloter l'organe de liquéfaction, le au moins un réchauffeur et la au moins une vanne pour liquéfier, dans stockage tampon, au moins une partie du gaz vaporisé dans le dispositif,
- l'organe d'acquisition de stockage et de traitement de données est conformé pour piloter l'organe de liquéfaction, le au moins un réchauffeur et la au moins une vanne pour maintenir la pression dans le réservoir en dessous d'un seuil de pression déterminé,
- le dispositif comporte au moins l'un parmi : un capteur de pression dans le réservoir, un capteur de température dans le réservoir, un capteur de pression dans le stockage tampon, un capteur de température dans le stockage tampon, ledit au moins un capteur étant relié à l'organe d'acquisition de stockage et de traitement de données,
- la pompe possède une perte (NPSH) de charge d'entrée déterminée, l'organe d'acquisition de stockage et de traitement de données étant conformé pour piloter l'organe de liquéfaction, le au moins un réchauffeur et la au moins une vanne pour maintenir la pression dans le réservoir ou dans la ligne d'aspiration au moins égale à la pression de saturation du fluide cryogenique augmentée de la perte (NPSH) de charge d'entrée de la pompe et augmentée éventuellement également de la valeur des pertes de charge dues à la tuyauterie de la ligne d'aspiration reliant le réservoir à la pompe,
- l'extrémité de la conduite de retour comprend une buse de répartition à jets multiples,
- l'organe de liquéfaction comprend un cryo-refroidisseur.

L'invention concerne également un procédé de fourniture de fluide utilisant un dispositif de fourniture de fluide selon l'une quelconque des caractéristiques ci-dessus ou ci-après comportant, pendant une période d'arrêt de la pompe et lorsque la pression dans le réservoir atteint un seuil déterminé, une étape de transfert de gaz vaporisé du réservoir vers le stockage tampon, une étape de liquéfaction, dans le stockage tampon, du gaz transféré via l'organe de liquéfaction.

Selon d'autres particularités possibles :
- lorsque le niveau de liquide dans le stockage tampon atteint un niveau limite déterminé, du liquide est transféré du stockage tampon vers le réservoir,
- au moins un transfert de fluide entre le stockage tampon et le réservoir (dans l'une ou les deux directions) est réalisé par l'établissement d'un différentiel de pression entre les pressions au sein du stockage tampon et du réservoir et mettant en relation fluidique ces derniers (ouverture de vanne(s),

- le procédé comporte une étape de refroidissement de la pompe par transfert de liquide du stockage tampon vers le réservoir via la seconde sortie de la pompe, l'entrée de la pompe et la conduite d'aspiration,
- le procédé comporte une étape de mise en marche et de refroidissement de la pompe par transfert de liquide du réservoir vers le stockage tampon via la conduite d'aspiration, l'entrée de la pompe et une sortie de la pompe, au moins une partie du gaz vaporisé dans le stockage tampon étant liquéfié par l'organe de liquéfaction,
- le procédé comporte une étape de pompage dans laquelle, lorsque la pression dans le stockage tampon est inférieure à la pression dans le réservoir, du liquide est pompé dans le réservoir via l'entrée et la seconde sortie de la pompe est reliée fluidiquement avec le stockage tampon,
- le procédé comporte une étape de pompage de liquide dans le réservoir durant laquelle au moins une partie du fluide vaporisé dans la pompe est transféré de la seconde sortie haute pression de la pompe vers le stockage tampon et liquéfié par l'organe de liquéfaction.

L'invention peut concerner également tout dispositif ou procédé alternatif comprenant toute combinaison des caractéristiques ci-dessus ou ci-dessous, dans le cadre des revendications.

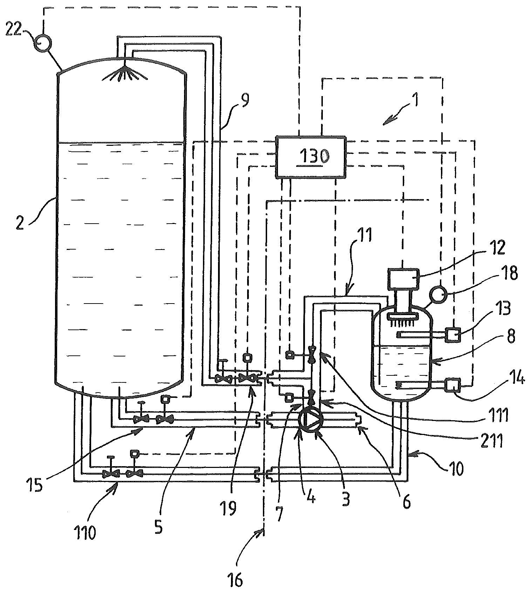

D'autres particularités et avantages apparaîtront à la lecture de la description ci-après, faite en référence à la figure unique qui représente une vue schématique et partielle illustrant la structure et le fonctionnement d'un dispositif de fourniture de fluide selon un exemple de réalisation de l'invention.

Le dispositif de fourniture de fluide comprend un réservoir 2 source de stockage de carburant gazeux à une température cryogénique sous la forme d'un mélange liquide-gaz. Le réservoir 2 est de préférence du type à double parois avec un vide d'isolation entre les deux parois.

Le dispositif comprend une pompe 3 cryogénique munie d'une entrée 4 d'aspiration reliée à la partie inférieure du réservoir 2 via une ligne 5 d'aspiration.

La pompe 3 comprend une première sortie 6 haute pression destinée à fournir du fluide (notamment liquide) sous pression à un utilisateur et une seconde sortie 7 de dégazage. La sortie 7 de dégazage est reliée à la partie supérieure du réservoir 2 via une conduite 9 de retour. Par exemple, l'extrémité de la conduite 9 de retour comprend une buse 17 de répartition à jets multiples en partie haute du réservoir 2.

Le dispositif 1 comprend en outre un stockage 8 cryogénique tampon distinct et une première conduite 10 reliant la partie inférieure du stockage 8 tampon au réservoir 2, de préférence à la partie inférieure du réservoir 2. Le dispositif 1 comprend une seconde conduite 11 reliant la partie supérieure du réservoir 2 au stockage 8 tampon, de préférence à la partie supérieure du stockage 8 tampon. De plus, le stockage 8 tampon comprend un organe 12 de liquéfaction du gaz dans le stockage 8 tampon, par exemple un cryo-refroidisseur.

Le stockage 8 tampon comprend de préférence au moins un réchauffeur et encore plus préférentiellement deux 13, 14 pour réchauffer sélectivement le fluide contenu dans le stockage 8 tampon en vue d'augmenter la pression au sein de ce dernier. Les deux réchauffeurs sont placés par exemple respectivement dans les parties supérieure et inférieure du stockage 8 tampon.

Comme illustré, la seconde conduite 11 peut comprendre une première extrémité raccordée à la partie supérieure du stockage 8 tampon et une seconde extrémité raccordée à la conduite 9 de retour. C'est-à-dire que le stockage 8 tampon est raccordé au réservoir 2 et à la seconde sortie 7 de la pompe 3 via la conduite 9 de retour.

Comme illustré schématiquement, tout ou partie des conduites et lignes peuvent comprendre des extrémités à raccordement amovible, par exemple selon une zone 16 de raccordement entre d'une part les parties liées au réservoir 2 et, d'autre part, les parties reliées au stockage 8 tampon et à la pompe 3. La pompe 3 et le stockage tampon 8 sont idéalement agencés pour minimiser la longueur des tuyauteries de raccordement 10 et 11 et les pertes de charge et entrées de chaleur additionnelles et parasites. La pompe 3 est par exemple une pompe standard disponible sur le marché. Dans le futur, il est possible d'utiliser une pompe 3 développée spécifiquement pour cette application et dont la conception permettra d'être immergée dans le réservoir tampon 8 éliminant le recours aux tuyauteries de liaison. L'une au moins parmi : la ligne 5 d'aspiration, la conduite 9 de retour, la première conduite 10, la seconde conduite 11 comprend au moins une vanne 15, 19, 110, 111, 211 notamment au moins une vanne pilotée. Par exemple, la ligne d'aspiration 5 comprend une ou deux vannes 15. La première conduite 10 peut comprendre une ou eux vannes 110. La seconde conduite 11 peut comprendre une vanne 111. La conduite 9 de dégazage peut comprendre une ou deux vannes 19. De même, la sortie 7 de dégazage de la pompe 3 peut comprendre une vanne 211 en amont de la jonction entre la conduite 9 de retour et de la seconde conduite 11.

De préférence, le dispositif comprend également un organe 130 d'acquisition de stockage et de traitement de données relié (sans fil et/ou par fil(s) aux vannes 15, 19, 110, 111, 211 et à l'organe 12 de liquéfaction.

L'organe 130 d'acquisition de stockage et de traitement de données peut être relié également au(x) réchauffeur(s) 13, 14.

L'organe 130 d'acquisition de stockage et de traitement de données peut comporter un micro-processeur, un ordinateur, ou toute autre dispositif approprié pour être conformé (programmé) pour piloter l'organe 12 de liquéfaction, le au moins un réchauffeur 13, 14 et les vannes 15, 19, 110, 111, 211.

En particulier, le dispositif peut être configuré pour commander la liquéfaction, dans stockage 8 tampon, d'au moins une partie du gaz vaporisé dans le dispositif (c'est-à-dire le gaz produit dans le réservoir ou la pompe ou le circuit).

De même, l'organe 130 d'acquisition de stockage et de traitement de données peut être conformé pour piloter l'organe 12 de liquéfaction, le au moins un réchauffeur 13, 14 et la ou les vannes 15, 19, 110, 111, 211 pour maintenir la pression dans le réservoir 2 en dessous d'un seuil de pression déterminé.

Avantageusement, le dispositif peut comporter au moins l'un parmi : un capteur 22 de pression dans le réservoir 2, un capteur de température dans le réservoir 2, un capteur 18 de pression dans le stockage 8 tampon, un capteur de température dans le stockage 8 tampon, ledit au moins un capteur 18, 22 étant de préférence relié à l'organe 130 d'acquisition de stockage et de traitement de données.

La pompe 3 possède une perte de charge d'entrée (NPSH) déterminée et connue. L'organe 130 d'acquisition de stockage et de traitement de données peut notamment être conformé pour piloter l'organe 12 de liquéfaction, le ou les réchauffeurs 13, 14 et la ou les vannes 15, 19, 110, 111, 211 pour maintenir la pression dans le réservoir 2 ou dans la ligne 5 d'aspiration au moins égale à la pression de saturation du fluide cryogenique augmentée de la perte de charge d'entrée de la pompe 3 (NPSH) et augmentée éventuellement également de la valeur des pertes de charge dues à la tuyauterie de la ligne 5 d'aspiration reliant le réservoir 1 à la pompe.

La structure et le fonctionnement du dispositif selon l'invention présentent de nombreux avantages par rapport aux solutions connues. Par exemple, et comme décrit plus précisément ci-après, le dispositif est connecté à la phase gazeuse du réservoir 2 via la ligne de dégazage 9 et permet de re-liquéfier dans le stockage tampon 8 les entrées de chaleur du réservoir 2 ou toute autre entrée de chaleur additionnelle et ainsi réduire/piloter la pression dans le réservoir 2. Les dimensionnements du stockage tampon 8 et de l'organe 12 de liquéfaction sont déterminés en fonction des performances thermiques de la pompe 3 et de ses éléments de raccordement avec le réservoir 2 mais aussi de ses cycles d'utilisation. Par exemple, lors d'un fonctionnement en continu, l'organe 12 de liquéfaction et le réservoir tampon 8 pourront être dimensionnés pour re-liquéfier en continu les gaz générés par la pompe 3 et les tuyauteries et éviter de renvoyer ces gaz vers le réservoir 2. Lors de fonctionnement en régime discontinu, les gaz générés sont renvoyés systématiquement vers le réservoir 2 en attente d'être reliquéfiés lorsque la pompe 3 est à l'arrêt. Ce mode de fonctionnement permet d'optimiser la taille de l'organe 12 liquéfacteur et du tampon 8. Un des avantages majeurs de ce dispositif est de rester fonctionnel quel que soit le niveau de liquide dans le réservoir 2 et surtout d'optimiser les conditions d'alimentation de la pompe 3.

Le dispositif permet de contrôler la pression dans le réservoir 2 en évitant l'évacuation à l'atmosphère ou l'utilisation d'un compresseur et d'un réservoir de récupération.

L'architecture permet également un fonctionnement optimal de la pompe et notamment une mise en froid et une alimentation en liquide avec un niveau de pression suffisant (NPSH) pour éviter ou limiter tout risque de cavitation quel que soit le niveau dans le réservoir 2.

Selon une caractéristique avantageuse, le phénomène de thermosiphon peut être obtenu par une gestion de la pression dans le circuit (au lieu des effets de gravité et de température).

Des exemples de divers modes de fonctionnement vont être décrits ci-dessous.

### Installation en attente

Lorsque le dispositif est inactif (« Off » à l'arrêt complet), la pompe 3 est inactive et toutes les vannes sont de préférence closes. La pression au sein du réservoir 2 augmente à mesure des entrées de chaleur. Après l'ouverture des vannes 19, 111 dans la conduite de retour et dans la seconde conduite 11, le stockage 8 tampon est relié à la phase gazeuse du réservoir 2. L'organe 12 de liquéfaction est en mesure d'aspirer le gaz du réservoir 2 en vue de le liquéfier dans le stockage 8 tampon. Le stockage 8 tampon accumule ainsi du liquide dont la quantité peut être mesurée par un capteur 18 de niveau et/ou de pression.

Ceci permet de faire diminuer la pression dans le réservoir 2. Lorsque le stockage 8 tampon est plein, la vanne 111 dans la seconde conduite 11 peut être close et un réchauffeur 13, 14 du stockage 8 tampon peut être activé si besoin pour augmenter la pression dans le stockage 8 tampon à une pression supérieure à la pression dans le réservoir 2. De cette façon, du liquide peut être renvoyé vers le réservoir 2 en ouvrant la vanne 110 dans la première conduite 10. Alternativement ou cumulativement, du liquide peut être renvoyé en partie haute du réservoir 2 via la seconde conduite 11 et la conduite 9 de retour en ouvrant les vannes 111, 19 concernées.

Ce transfert de liquide s'interrompt lorsque la pression devient identique entre le réservoir 2 et le stockage tampon 8. Ce processus peut être recommencé autant que nécessaire, notamment afin de maintenir un niveau de liquide et de froid dans le réservoir 2 en vue d'une future opération de pompage.

### Refroidissement de la pompe.

Avant une opération de pompage, le stockage tampon 8 est de préférence plein et à une pression supérieure à la pression dans le réservoir 2 et toutes les vannes sont closes.

En ouvrant les vannes 111, 211, 15, dans la seconde conduite et la ligne 5 d'aspiration, du liquide froid peut être renvoyé dans le réservoir en passant par la pompe 3 pour la refroidir. Le liquide revient dans la partie liquide où le gaz est reliquéfié. L'augmentation de pression est alors relativement faible. Lorsque la pompe 3 est suffisamment refroidie (mesuré par exemple par un ou des capteurs de température), la pompe 3 est prête à être utilisée.

Dans le cas où la pompe 3 n'est pas adaptée pour recevoir un flux en sens inverse, un flux de liquide peut au contraire être prélevé dans le réservoir 2 vers le stockage 8 tampon via la pompe 3. Ce fluide réchauffé peut être à nouveau liquéfié dans le stockage 8 tampon. Pour ce mode de fonctionnement, la pression dans le réservoir 2 doit être supérieure à la pression dans le stockage 8 tampon. Ceci peut être obtenu en augmentant la pression dans le réservoir 2 (via un réchauffeur par exemple) et/ou en diminuant la pression dans le stockage tampon 8 (via l'organe 12 de liquéfaction).

Si la pompe 3 a de mauvaises performances, l'organe 12 de liquéfaction et le stockage 8 tampon peuvent être insuffisamment dimensionnés pour liquéfier tout le gaz produit. Dans ce cas du gaz peut être renvoyé au réservoir 2 en augmentant sa pression en vue d'une re-liquéfaction ultérieure (cf. ci-dessus).

Dans un cas extrême où la pompe 3 vaporise 3kg d'hydrogène pour son refroidissement, un stockage tampon de 400 litres et un cryo-refroidisseur de puissance 100 Watt à 20°C peuvent suffire à liquéfier tout le gaz produit lors de la mise ne froid de la pompe 3.

Le mode de refroidissement de la pompe 3 peut être adapté en fonction notamment du niveau de liquide dans le réservoir.

### Pompe active ou en mode de pause (froide).

Lorsque la pompe 3 est à bonne température elle peut pomper le liquide. La pompe 3 peut être maintenue à la bonne température en dirigeant l'excès de liquide pompé vers le stockage tampon (via la seconde conduite 11).

L'organe 12 de liquéfaction ayant une puissance de refroidissement supérieure aux pertes thermiques dans la pompe 3, le gaz vaporisé lors du pompage peut être intégralement liquéfié dans le stockage 8 tampon.

Ceci s'applique également dans la cas où la pompe 3 est en pause mais en froid.

Les signaux fournis par le ou les capteurs de pression et de température permettent le cas échéant de contrôler le degré d'ouverture de la vanne 211 au niveau de la sortie de dégazage de la pompe 3. Lorsque le stockage 8 tampon est plein, sa vidange dans le réservoir 2 peut être réalisée selon le processus décrit précédemment.

Dans une installation classique, lorsque la pompe est alimentée avec du liquide insuffisamment sous-refroidi, comme c'est généralement le cas en fin de vidange du réservoir ou de stand-by prolongé de l'installation, la pompe 3 peut se désamorcer (risque de cavitation) car le liquide n'est pas suffisamment sous-refroidi à l'entrée de la pompe 3. Ceci peut avoir des conséquences dommageables pour l'équipement. Généralement, on récupère l'amorçage de la pompe en libérant à l'atmosphère la sortie , 7 de dégazage .

Le dispositif permet d'éviter cette perte de gaz. Tout d'abord, pendant les phases inactives de l'installation, le dispositif permet d'abaisser/piloter la pression dans le réservoir 2 et donc la température du liquide de façon à garantir le sous-refroidissement du liquide à l'entrée de la pompe 3. Alternativement, l'amorçage de la pompe 3 peut être récupéré en dégazant la pompe 3 dans le stockage tampon 8 au travers des vannes 111 et 211 comme dans le cas du refroidissement décrit précédemment en ayant pris soin d'abaisser la pression dans le tampon 8 avant le démarrage de l'installation. Ceci peut être fait sans nécessiter d'augmenter la pression dans le réservoir 2. Ceci peut être répété tant que la pression dans le stockage 8 tampon reste inférieure à la pression dans le réservoir 2. Pendant ces opérations le l'organe 12 de liquéfaction 12 est en fonctionnement et re-liquéfie le gaz. Une fois le stockage tampon 8 plein, celui-ci est vidangé vers le réservoir 2 au travers de la ligne 10 et la vanne 110 de façon à être opérationnel pour faire face à toute éventualité de dysfonctionnement de la pompe 3 qui nécessiterait son dégazage.

## Revendications

1. Dispositif de fourniture de fluide comprenant un réservoir (2) source de stockage de carburant gazeux à une température cryogénique sous la forme d'un mélange liquide-gaz, une pompe (3) cryogénique, la pompe (3) comprenant une entrée (4) d'aspiration reliée à la partie inférieure du réservoir (2) via une ligne (5) d'aspiration, une première sortie (6) haute pression destinée à fournir du fluide sous pression à un utilisateur, le dispositif comprenant un stockage (8) cryogénique tampon, une première conduite (10), reliant la partie inférieure du stockage (8) tampon au réservoir (2) et une seconde conduite (11) reliant la partie supérieure du réservoir (2) au stockage (8) tampon, **caractérisé en ce que** la pompe (3) comprend une seconde sortie (7) de dégazage reliée à la partie supérieure du réservoir (2) via une conduite (9) de retour, et **en ce que** la première conduite (10) est , distincte de la ligne d'aspiration, et **en ce que** le dispositif comprend un organe (12) de liquéfaction du gaz dans le stockage (8) tampon.

2. Dispositif selon la revendication 1, **caractérisé en ce que** la seconde conduite (11) comprend une première extrémité raccordée à la partie supérieure du stockage (8) tampon et une seconde extrémité raccordée à la conduite (9) de retour, c'est-à-dire que le stockage (8) tampon est raccordé au réservoir (2) et à la seconde sortie (7) de la pompe (3) via la conduite (9) de retour.

3. Dispositif selon la revendication 1 ou 2, **caractérisé en ce que** le stockage (8) tampon comprend au moins un réchauffeur (13, 14) pour réchauffer sélectivement le fluide contenu dans le stockage (8) tampon en vue d'augmenter la pression au sein de ce dernier.

4. Dispositif selon la revendication 3, **caractérisé en ce que** le stockage (8) tampon comprend deux réchauffeurs (13, 14) disposés respectivement dans les partie supérieure et inférieure du stockage.

5. Dispositif selon l'une quelconque des revendications 1 à 4, **caractérisé en ce que** l'une au moins parmi : la ligne (5) d'aspiration, la conduite (9) de retour, la première conduite (10), la seconde conduite (11) comprend au moins une vanne (15, 19, 110, 111, 211) notamment au moins une vanne pilotée.

6. Dispositif selon la revendication 5, **caractérisé en ce qu'**il comprend un organe (130) d'acquisition de stockage et de traitement de données relié à la au moins une vanne (15, 19, 110, 111, 211) et à l'organe (12) de liquéfaction.

7. Dispositif selon la revendication 6 combinée à l'une quelconque des revendications 3 ou 4, **caractérisé en ce que** l'organe (130) d'acquisition de stockage et de traitement de données est relié également à le ou les réchauffeurs (13, 14), l'organe (130) d'acquisition de stockage et de traitement de données étant conformé pour piloter l'organe (12) de liquéfaction, le au moins un réchauffeur (13, 14) et la au moins une vanne (15, 19, 110, 111, 211) pour liquéfier, dans stockage (8) tampon, au moins une partie du gaz vaporisé dans le dispositif.

8. Dispositif selon la revendication 7, **caractérisé en ce que** l'organe (130) d'acquisition de stockage et de traitement de données est conformé pour piloter l'organe (12) de liquéfaction, le au moins un réchauffeur (13, 14) et la au moins une vanne (15, 19, 110, 111, 211) pour maintenir la pression dans le réservoir (2) en dessous d'un seuil de pression déterminé.

9. Dispositif selon l'une quelconque des revendications 6 à 8, **caractérisé en ce qu'**il comporte au moins l'un parmi : un capteur (22) de pression dans le réservoir (2) un capteur de température dans le réservoir (2), un capteur (18) de pression dans le stockage (8) tampon, un capteur de température dans le stockage (8) tampon, ledit au moins un capteur (18, 22) étant relié à l'organe (130) d'acquisition de stockage et de traitement de données.

10. Dispositif selon l'une quelconque des revendications 7 à 9, **caractérisé en ce que** la pompe (3) possède une perte (NPSH) de charge d'entrée déterminée, l'organe (130) d'acquisition de stockage et de traitement de données étant conformé pour piloter l'organe (12) de liquéfaction, le au moins un réchauffeur (13, 14) et la au moins une vanne (15, 19, 110, 111, 211) pour maintenir la pression dans le réservoir (2) ou dans la ligne (5) d'aspiration au moins égale à la pression de saturation du fluide cryogenique augmentée de la perte (NPSH) de charge d'entrée de la pompe (3) et augmentée éventuellement également de la valeur des pertes de charge dues à la tuyauterie de la ligne (5) d'aspiration reliant le réservoir (1) à la pompe (3).

11. Procédé de fourniture de fluide utilisant un dispositif de fourniture de fluide selon l'une quelconque des revendications 1 à 10, **caractérisé en ce qu'**il comporte, pendant une période d'arrêt de la pompe (3) et lorsque la pression dans le réservoir (2) atteint un seuil déterminé, une étape de transfert de gaz vaporisé du réservoir (2) vers le stockage (8) tampon, une étape de liquéfaction, dans le stockage (8) tampon, du gaz transféré, via l'organe (12) de liquéfaction.

12. Procédé selon la revendication 11, **caractérisé en ce que**, lorsque le niveau de liquide dans le stockage (8) tampon atteint un niveau limite déterminé, du liquide est transféré du stockage (8) tampon vers le réservoir (2).

13. Procédé selon la revendication 12, **caractérisé en ce qu'**au moins un transfert de fluide entre le stockage tampon (8) et le réservoir (2) (dans l'une ou les deux directions) est réalisé par l'établissement d'un différentiel de pression entre les pressions au sein du stockage (8) tampon et du réservoir (2) et mettant en relation fluidique ces derniers (ouverture de vanne(s).

14. Procédé selon l'une quelconque des revendications 11 à 13, **caractérisé en ce qu'**il comporte une étape de refroidissement de la pompe (3) par transfert de liquide du stockage (8) tampon vers le réservoir (2) via la seconde sortie (7) de la pompe, l'entrée (4) de la pompe (3) et la conduite (5) d'aspiration.

15. Procédé selon l'une quelconque des revendications 11 à 14, **caractérisé en ce qu'**il comporte une étape de mise en marche et de refroidissement de la pompe (3) par transfert de liquide du réservoir (2) vers le stockage (8) tampon via la conduite (5) d'aspiration, l'entrée (4) de la pompe et une sortie (7) de la pompe (3), au moins une partie du gaz vaporisé dans le stockage (8) tampon étant liquéfié par l'organe (12) de liquéfaction.

## Patentansprüche

1. Fluidzuleitungsvorrichtung, umfassend einen Quellbehälter (2) zum Speichern von gasförmigem Kraftstoff bei kryogener Temperatur in Form eines Gas-Flüssigkeits-Gemisches, eine Kryopumpe (3), wobei die Pumpe (3) einen Ansaugeinlass (4) umfasst, der mit dem unteren Teil des Behälters (2) über eine Ansaugleitung (5) verbunden ist, einen ersten Hochdruckausgang (6), der dazu bestimmt ist, einem Benutzer Druckfluid zuzuleiten, wobei die Vorrichtung einen kryogenen Pufferspeicher (8) umfasst, wobei ein erster Kanal (10) den unteren Teil des Pufferspeichers (8) mit dem Behälter (2) verbindet und ein zweiter Kanal (11) den oberen Teil des Behälters (2) mit dem Pufferspeicher (8) verbindet, **dadurch gekennzeichnet, dass** die Pumpe (3) einen zweiten Entlüftungsausgang (7) umfasst, der mit dem oberen Teil des Behälters (2) über einen Rücklaufkanal (9) verbunden ist, und dadurch, dass sich der erste Kanal (10) von der Ansaugleitung unterscheidet, und dadurch, dass die Vorrichtung ein Organ (12) zur Verflüssigung des Gases im Pufferspeicher (8) umfasst.

2. Vorrichtung nach Anspruch 1, **dadurch gekennzeichnet, dass** der zweite Kanal (11) ein erstes Ende, das an den oberen Teil des Pufferspeichers (8) angeschlossen ist, und ein zweites Ende umfasst, das an den Rücklaufkanal (9) angeschlossen ist, das heißt, dass der Pufferspeicher (8) an den Behälter (2) und an den zweiten Ausgang (7) der Pumpe (3) über den Rücklaufkanal (9) angeschlossen ist.

3. Vorrichtung nach Anspruch 1 oder 2, **dadurch gekennzeichnet, dass** der Pufferspeicher (8) mindestens einen Erhitzer (13, 14) zum selektiven Erhitzen des im Pufferspeicher (8) enthaltenen Fluides umfasst, um den Druck innerhalb dieses Letzteren zu erhöhen.

4. Vorrichtung nach Anspruch 3, **dadurch gekennzeichnet, dass** der Pufferspeicher (8) zwei Erhitzer (13, 14) umfasst, die jeweils im oberen und unteren Teil des Speichers angeordnet sind.

5. Vorrichtung nach einem der Ansprüche 1 bis 4, **dadurch gekennzeichnet, dass** mindestens eines aus: der Ansaugleitung (5), dem Rücklaufkanal (9), dem ersten Kanal (10), dem zweiten Kanal (11) mindestens ein Ventil (15, 19, 110, 111, 211), insbesondere mindestens ein gesteuertes Ventil umfasst.

6. Vorrichtung nach Anspruch 5, **dadurch gekennzeichnet, dass** sie ein Organ (130) zur Speichererfassung und zur Datenverarbeitung umfasst, das mit dem mindestens einen Ventil (15, 19, 110, 111, 211) und mit dem Organ (12) zur Verflüssigung verbunden ist.

7. Vorrichtung nach Anspruch 6, kombiniert mit einem der Ansprüche 3 oder 4, **dadurch gekennzeichnet, dass** das Organ (130) zur Speichererfassung und zur Datenverarbeitung ebenfalls mit dem oder den Erhitzern (13, 14) verbunden ist, wobei das Organ (130) zur Speichererfassung und zur Datenverarbeitung ausgebildet ist, das Organ (12) zur Verflüssigung, den mindestens einen Erhitzer (13, 14) und das mindestens eine Ventil (15, 19, 110, 111, 211) zu steuern, um im Pufferspeicher (8) mindestens einen Teil des in der Vorrichtung verdampften Gases zu verflüssigen.

8. Vorrichtung nach Anspruch 7, **dadurch gekennzeichnet, dass** das Organ (130) zur Speichererfassung und zur Datenverarbeitung ausgebildet ist, das Organ (12) zur Verflüssigung, den mindestens einen Erhitzer (13, 14) und das mindestens eine Ventil (15, 19, 110, 111, 211) zu steuern, um den Druck im Behälter (2) unterhalb einer bestimmten Druckschwelle zu halten.

9. Vorrichtung nach einem der Ansprüche 6 bis 8, **dadurch gekennzeichnet, dass** sie mindestens eines beinhaltet aus: einem Drucksensor (22) im Behälter (2), einem Temperatursensor im Behälter (2), einem Drucksensor (18) im Pufferspeicher (8), einem Temperatursensor im Pufferspeicher (8), wobei der mindestens eine Sensor (18, 22) mit dem Organ (130) zur Speichererfassung und zur Datenverarbeitung verbunden ist.

10. Vorrichtung nach einem der Ansprüche 7 bis 9, **dadurch gekennzeichnet, dass** die Pumpe (3) einen bestimmten Einlassdruckverlust (NPSH) besitzt, wobei das Organ (130) zur Speichererfassung und zur Datenverarbeitung ausgebildet ist, das Organ (12) zur Verflüssigung, den mindestens einen Erhitzer (13, 14) und das mindestens eine Ventil (15, 19, 110, 111, 211) zu steuern, um den Druck im Behälter (2) oder in der Ansaugleitung (5) mindestens gleich wie den Sättigungsdruck des kryogenen Fluides zu halten, der um den Einlassdruckverlust (NPSH) der Pumpe (3) erhöht ist und eventuell, aufgrund der Verrohrung der Ansaugleitung (5), die den Behälter (1) mit der Pumpe (3) verbindet, ebenfalls um den Wert der Druckverluste erhöht ist.

11. Fluidzuleitungsverfahren durch Verwenden einer Fluidzuleitungsvorrichtung nach einem der Ansprüche 1 bis 10, **dadurch gekennzeichnet, dass** es während einer Stillstandzeit der Pumpe (3) und sobald der Druck im Behälter (2) eine bestimmte Schwelle erreicht einen Schritt des Transfers von verdampftem Gas vom Behälter (2) zum Pufferspeicher (8), einen Schritt der Verflüssigung, im Pufferspeicher (8), des transferierten Gases über das Organ (12) zur Verflüssigung beinhaltet.

12. Verfahren nach Anspruch 11, **dadurch gekennzeichnet, dass**, sobald der Flüssigkeitspegel im Pufferspeicher (8) einen bestimmten Grenzpegel erreicht, Flüssigkeit vom Pufferspeicher (8) zum Behälter (2) transferiert wird.

13. Verfahren nach Anspruch 12, **dadurch gekennzeichnet, dass** mindestens ein Fluidtransfer zwischen dem Pufferspeicher (8) und dem Behälter (2) (in eine oder beide Richtungen) durch die Herstellung einer Druckdifferenz zwischen den Drücken innerhalb des Pufferspeichers (8) und des Behälters (2) ausgeführt wird und indem diese Letzteren in fluide Verbindung gebracht werden (Öffnung von Ventil(en).

14. Verfahren nach einem der Ansprüche 11 bis 13, **dadurch gekennzeichnet, dass** es einen Schritt des Kühlens der Pumpe (3) durch einen Flüssigkeitstransfer vom Pufferspeicher (8) zum Behälter (2) über den zweiten Ausgang (7) der Pumpe, den Einlass (4) der Pumpe (3) und den Ansaugkanal (5) beinhaltet.

15. Verfahren nach einem der Ansprüche 11 bis 14, **dadurch gekennzeichnet, dass** es einen Schritt des Einschaltens und des Kühlens der Pumpe (3) durch einen Flüssigkeitstransfer vom Behälter (2) zum Pufferspeicher (8) über den Ansaugkanal (5), den Einlass (4) der Pumpe und einen Ausgang (7) der Pumpe (3) beinhaltet, wobei mindestens ein Teil des verdampften Gases im Pufferspeicher (8) durch das Organ (12) zur Verflüssigung verflüssigt wird.

## Claims

1. Device for supplying fluid comprising a tank (2) source of gaseous fuel storage at a cryogenic temperature in the form of a liquid-gas mixture, a cryogenic pump (3), the pump (3) comprising a suction inlet (4) connected to the lower portion of the tank (2) via a suction line (5), a first high-pressure outlet (6) intended to supply pressurised fluid to a user, the device comprising a cryogenic buffer storage (8), a first pipe (10), connecting the lower portion of the buffer storage (8) to the tank (2) and a second pipe (11) connecting the upper portion of the tank (2) to the buffer storage (8), **characterised in that** the pump (3) comprises a second outlet (7) for degassing connected to the upper portion of the tank (2) via a return pipe (9), and **in that** the first pipe (10) is separate from the suction line, and **in that** the device comprises a member (12) for liquefaction of the gas in the buffer storage (8).

2. Device according to claim 1, **characterised in that** the second pipe (11) comprises a first end connected to the upper portion of the buffer storage (8) and a second end connected to the return pipe (9), i.e. the buffer storage (8) is connected to the tank (2) and to the second outlet (7) of the pump (3) via the return pipe (9).

3. Device according to claim 1 or 2, **characterised in that** the buffer storage (8) comprises at least one heater (13, 14) for selectively heating the fluid contained in the buffer storage (8) for the purpose of increasing the pressure within the latter.

4. Device according to claim 3, **characterised in that** the buffer storage (8) comprises two heaters (13, 14) arranged respectively in the upper and lower portions of the storage.

5. Device according to any of claims 1 to 4, **characterised in that** at least one from among: the suction line (5), the return pipe (9), the first pipe (10), the second pipe (11) comprises at least one valve (15, 19, 110, 111, 211) in particular at least one controlled valve.

6. Device according to claim 5, **characterised in that** it comprises a member (130) for acquiring, storing and processing data connected to the at least one valve (15, 19, 110, 111, 211) and to the member (12) for liquefaction.

7. Device according to claim 6 combined with any one of claims 3 or 4, **characterised in that** the member (130) for acquiring, storing and processing data is also connected to the heater or heaters (13, 14), the member (130) for acquiring, storing and processing data being conformed to control the member (12) for liquefaction, the at least one heater (13, 14) and the at least one valve (15, 19, 110, 111, 211) for liquefying, in buffer storage (8), at least one portion of the gas vaporised in the device.

8. Device according to claim 7, **characterised in that** the member (130) for acquiring, storing and processing data is conformed to control the member (12) for liquefaction, the at least one heater (13, 14) and the at least one valve (15, 19, 110, 111, 211) to maintain the pressure in the tank (2) below a determined pressure threshold.

9. Device according to any one of claims 6 to 8, **characterised in that** it comprises at least one from among: a pressure sensor (22) in the tank (2), a temperature sensor in the tank (2), a pressure sensor (18) in the buffer storage (8), a temperature sensor in the buffer storage (8), said at least one sensor (18, 22) being connected to the member (130) for acquiring, storing and processing data.

10. Device according to any one of claims 7 to 9, **characterised in that** the pump (3) has a determined inlet load loss (NPSH), the member (130) for acquiring, storing and processing data being conformed to control the member (12) for liquefaction, the at least one heater (13, 14) and the at least one valve (15, 19, 110, 111, 211) to maintain the pressure in the tank (2) or in the suction line (5) at least equal to the saturation pressure of the cryogenic fluid increased by the input load loss (NPSH) of the pump (3) and also optionally increased by the value of the load losses due to the pipework of the suction line (5) connecting the tank (1) to the pump (3).

11. Method for supplying fluid using a device for supplying fluid according to any one of claims 1 to 10, **characterised in that** it comprises, during a stoppage period of the pump (3) and when the pressure in the tank (2) reaches a determined threshold, a step of transferring vaporised gas from the tank (2) to the buffer storage (8), a step of liquefaction, in the buffer storage (8), of the transferred gas, via the member (12) for liquefaction.

12. Method according to claim 11, **characterised in that**, when the level of liquid in the buffer storage (8) reaches a determined limit level, liquid is transferred from the buffer storage (8) to the tank (2).

13. Method according to claim 12, **characterised in that** at least one transfer of fluid between the buffer storage (8) and the tank (2) (in one or the other of the directions) is carried out by the establishing of a pressure differential between the pressures within the buffer storage (8) and the tank (2) and putting the latter in fluidic communication (opening of the valve(s).

14. Method according to any one of claims 11 to 13, **characterised in that** it comprises a step of cooling the pump (3) by the transfer of liquid from the buffer storage (8) to the tank (2) via the second outlet (7) of the pump, the inlet (4) of the pump (3) and the suction pipe (5).

15. Method according to any one of claims 11 to 14, **characterised in that** it comprises a step of turning on and cooling the pump (3) by the transfer of liquid from the tank (2) to the buffer storage (8) via the suction pipe (5), the inlet (4) of the pump and an outlet (7) of the pump (3), at least one portion of the vaporised gas in the buffer storage (8) being liquefied by the member (12) for liquefaction.
